# EUROPÄISCHE PATENTSCHRIFT

(11) **EP 0 890 947 B1**
(45) Veröffentlichungstag und Bekanntmachung des Hinweises auf die Patenterteilung: **15.01.2003**
(21) Anmeldenummer: 98118258.7
(22) Anmeldetag: 13.10.1993
(51) Int. Cl.: G11B 19/10, G11B 17/04

(54) **Gerät für ein plattenförmiges optisches Speichermedium**
Apparatus for a disk-shaped optical recording medium
Appareil pour milieu d'enregistrement optique en forme de disque

(30) Priorität: 21.10.1992 DE 42353998 F
(43) Veröffentlichungstag der Anmeldung: 13.01.1999
(62) Teilanmeldung aus: 93116519.5
(73) Patentinhaber: Blaupunkt-Werke GmbH, D-31139 Hildesheim (DE)
(72) Erfinder: Baas, Dieter, 77694 Auenheim (DE)
(74) Vertreter: Friedmann, Jürgen, Dr.-Ing.

(56) Entgegenhaltungen:
- EP-A- 0 331 839

## Beschreibung

Die Erfindung betrifft ein Gerät für ein plattenförmiges optisches Speichermedium nach der Gattung des Hauptanspruchs.

Bei Geräten zur Wiedergabe und gegebenenfalls auch zur Aufnahme von Informationen von optischen Speichermedien bzw. auf optische Speichermedien, insbesondere sogenannten Compact-Discs (CDs), sind verschiedene Einrichtungen zum motorischen Einziehen oder Ausschieben des Speichermediums vorgesehenen (siehe z. B. EP-A-0 331 839). Mit Hilfe dieser Einrichtungen gelangt das Speichermedium von einer Einführöffnung in die Arbeitsposition im Wirkungsbereich einer optischen Abtasteinrichtung. Insbesondere bei Geräten, die für einen mobilen Einsatz, beispielsweise in einem Kraftfahrzeug, konzipiert sind, ist diese Einzug- und Ausschubmechanik aufgrund der beengten Platzverhältnisse besonders kompakt und komplex ausgelegt.

Zum Auslösen von Schaltvorgängen ist das Erkennen von einer oder mehreren Zwischenpositionen des Speichermediums während des Einzugs bzw. des Ausschubs erforderlich. Dazu werden bei bekannten Geräten aus jeweils einem optischen Sender und einem optischen Empfänger bestehende Lichtschranken verwendet.

In der Ausführungsform des erfindungsgemäßen Gerätes mit einer antreibbaren Walze zur Bewegung des Speichermediums senkrecht zur Drehachse besteht darin, ist ein Antrieb der Walze mit Hilfe der Reflexionslichtschranke einschaltbar, wenn das Speichermedium beim Zuführen in den Wirkungsbereich der Walze gelangt.

Bei dieser Ausführungsform ist vorgesehen, daß ferner die Reflexionslichtschranke derart angeordnet ist, daß der Antrieb der Walze bei einer Bewegung in umgekehrter Richtung zum Zwecke eines Ausschubs des Speichermediums abgeschaltet wird, bevor die Walze das Speichermedium freigibt. Damit wird der Vorteil erzielt, daß die Speicherplatte bis zu einer manuellen Entnahme von der Walze festgehalten wird und nicht aus der Einführungsöffnung herausfällt. Beim Einführen des Speichermediums in ein Gerät gemäß dieser Ausführungsform gleitet das Speichermedium über die noch stehende Walze bis durch die Wirkung der Reflexionslichtschranke der Antrieb für die Walze eingeschaltet wird. Dieses Gleiten bedeutet jedoch meist keinen Nachteil, da die Walze ohnehin derart ausgelegt ist, daß eine Beschädigung des Speichermediums ausgeschlossen ist.

Vorzugsweise sind Infrarot-Lichtschranken geeignet. Es können jedoch auch Lichtschranken im sichtbaren Bereich verwendet werden. Um ein Ansprechen der Reflexionslichtschranke bei Abwesenheit des Speichermediums zu verhindern, können der Reflexionslichtschranke gegenüberliegende Teile des Gerätes mit dunkler Oberfläche versehen sein.

Eine Weiterbildung der obengenannten Ausführungsform besteht darin, daß ein Spiegel der Reflexionslichtschranke gegenüber derart angeordnet ist, daß ein von der Reflexionslichtschranke ausgehender und den Weg des Speichermediums ein erstes Mal kreuzender Lichtstrahl an dem Spiegel reflektiert wird und nach einem zweiten Kreuzen des Wegs des Speichermediums auf einen Lichtempfänger trifft.' Dadurch ist es möglich, mit nur einem zusätzlichen Lichtempfänger, beispielsweise einem Phototransistor, das Speichermedium an einer zweiten Zwischenposition zu detektieren.

Bei dieser Weiterbildung ist vorzugsweise vorgesehen, daß der Lichtstrahl den Weg des Speichermediums zu beiden Seiten der Walze je einmal kreuzt. Dadurch wird in einfacher Weise möglich, daß beim Einführen des Speichermediums der Antrieb der Walze bereits eingeschaltet wird, bevor das Speichermedium den Erfassungsbereich der Walze erreicht. Dadurch wird dem Benutzer eine "angenehmere" Einzugaufnahme geboten. Beim Ausschieben des Speichermediums kann der Antrieb der Walze bereits angehalten werden, bevor die Walze das Speichermedium freigibt.

Befindet sich das Speichermedium in einer zur Drehachse konzentrischen Position, so ist eine relative Bewegung in Richtung auf einen Drehteller und eine Abtasteinrichtung erforderlich. Dieses kann durch ein Absenken des Speichermediums oder eine entsprechende Gegenbewegung des Drehtellers und der Abtasteinrichtung erfolgen. In beiden Fällen ist es erforderlich, den Antrieb der Walze beim Erreichen der konzentrischen Position abzuschalten und die Relativbewegung in Richtung auf den Drehteller auszulösen. Hierzu ist bei einer anderen Ausbildung des erfindungsgemäßen Gerätes vorgesehen, daß die Zwischenposition der Lage des Speichermediums in der Drehachse entspricht.

Eine andere Ausführungsform besteht darin, daß sowohl für eine Zwischenposition, welche das optische Speichermedium zunächst bei manueller Zuführung erreicht, als auch für eine Zwischenposition, in welcher sich das Speichermedium in der Drehachse befindet, je eine Reflexionslichtschranke vorgesehen ist.

Um die Toleranzen bei der Erkennung der Zwischenposition möglichst klein zu halten, sollten der Sender und der Empfänger der Reflexionslichtschranke dicht nebeneinander angeordnet sein. Um dabei ein Übersprechen zwischen dem Sender und dem Empfänger zu vermeiden, ist bei einer anderen Weiterbildung der Erfindung vorgesehen, daß bei der Reflexionslichtschranke die Abstrahlebene vor der Detektionsebene liegt.

Eine relativ große Entfernung zwischen dem die Reflexionslichtschranke bildenden Bauelement und dem reflektierenden Speichermedium ist gemäß einer anderen Weiterbildung dadurch möglich, daß die Reflexionslichtschranke pulsierend betrieben wird.

Es ist auch eine analoge Auswertung der Signale der Reflexionslichtschranke möglich, etwa um den Ansprechpunkt genau einstellen zu können. Dazu kann entweder das Ausgangssignal des Empfängers als Analogsignal mit einem vorgebbaren Schwellwert verglichen werden. Es kann jedoch auch die Lichtintensität des Senders zeitabhängig gesteuert und der Zeitpunkt des als Schaltsignal auftretenden Ausgangssignals des Empfängers ausgewertet werden.

Eine vorteilhafte Ausbildung besteht darin, daß die Reflexionslichtschranke auf einer die weiteren elektronischen Bauteile des Gerätes tragenden Leiterplatte angeordnet ist. Insbesondere für das Abspielen von 8cm-Compact-Discs kann in vorteilhafter Weise vorgesehen sein, daß eine Reflexionslichtschranke zum Erkennen der Größe des Speichermediums vorgesehen ist.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung des Gerätes als Draufsicht,
- Fig. 2: ebenfalls in schematischer Darstellung einen Schnitt durch das Gerät,
- Fig. 3: ein Blockschaltbild mit einer Schaltungsanordnung in dem Gerät und
- Fig. 4: ein Ablaufdiagramm zur Steuerung des Einzugs eines Speichermediums.

Gleiche Teile sind in den Figuren mit gleichen Bezugszeichen versehen. Die Ausführungsbeispiele gehen von bekannten CD-Laufwerken aus, so daß es zur Erläuterung der Ausführungsbeispiele nicht erforderlich ist, das gesamte Laufwerk zu beschreiben, sondern lediglich die zum Verständnis der Erfindung erforderlichen Teile.

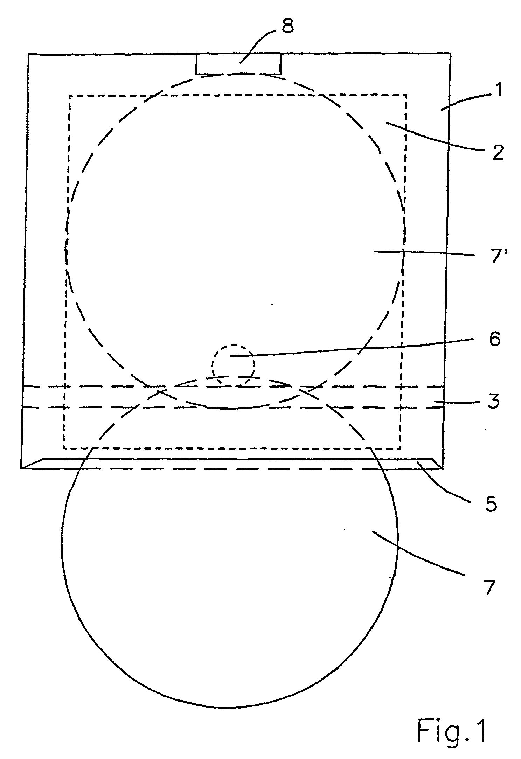

Innerhalb des Laufwerk-Chassis 1 bei dem Gerät nach Fig. 1 ist eine Leiterplatte 2 angeordnet, auf der sich alle wesentlichen elektronischen Bauelemente befinden. Zum Einziehen bzw. Ausschieben sind Walzen 3 vorgesehen, welche die Platte 7 nach einem manuellen Einführen erfassen und in die gestrichelt dargestellte Position 7' bringen. Je nach Ausführungen im einzelnen können zu beiden Seiten der Platte Walzen angeordnet sein, es kann jedoch auch lediglich eine antreibbare Walze vorgesehen sein, wobei die Platte an einer am oberen Teil des Chassis 1 befindlichen Führung gleitet.

Soll eine Platte abgespielt werden, so wird sie von Hand zwischen den Walzen 3 hindurchgesteckt, so daß das vom Sender einer Reflexionslichtschranke 6 ausgestrahlte Licht zu dem Empfänger der Reflexionslichtschranke reflektiert wird. Dadurch wird ein Antriebsmotor für die Walzen 3 eingeschaltet und die Platte 7 in die Position 7' bewegt.

Dabei stößt sie gegen einen Anschlag 8, der derart angeordnet ist, daß sich die Platte dann noch mit ihrem Rand zwischen den Walzen 3 und konzentrisch über einem in Fig. 1 nicht dargestellten Drehteller befindet. Durch Absenken der einen Walze wird die Platte auf den Drehteller aufgelegt.

Die Oberfläche der Walzen 3 sowie deren Andruckkraft auf die Platte sind derart ausgelegt, daß ein Gleiten zwischen Platte und Walzen, das bei dem in Fig. 1 dargestellten Ausführungsbeispiel beim manuellen Einführen und beim Erreichen des Anschlags 8 nicht zu vermeiden ist, die Platte nicht beschädigt.

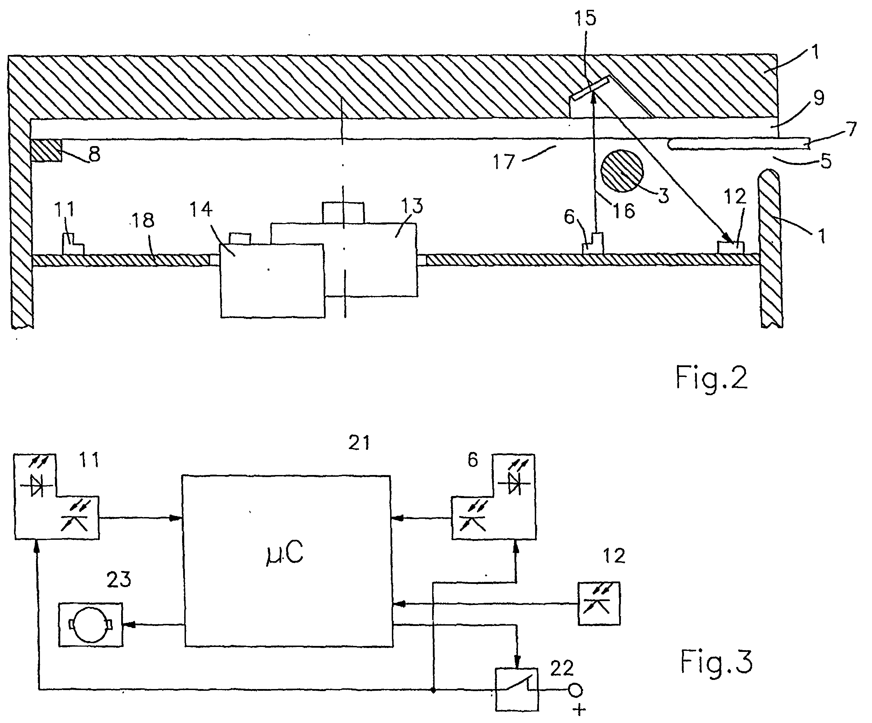

Nach Erreichen der Position 7' kann der Antrieb der Walzen 3 beispielsweise durch eine Zeitsteuerung abgeschaltet und das Absenken der Platte eingeleitet werden. Dieses kann jedoch auch mit Hilfe einer weiteren Reflexionslichtschranke erfolgen, was unter anderem im Zusammenhang mit Fig. 2 erläutert wird.

Fig. 2 zeigt in Form einer Schnittdarstellung einen Teil eines erfindungsgemäßen Gerätes mit einem Chassis 1, einer Einführungsöffnung 5 für die Platte 7, einer Walze 3 und einer Führung 9, auf welcher die Platte 7 beim Einzug entlang gleitet. Auf der Leiterplatte 1 - im folgenden Hauptplatine genannt - befinden sich eine Reflexionslichtschranke 6, eine weitere Reflexionslichtschranke 11 und ein Lichtempfänger 12. Weitere auf der Hauptplatine 18 befindliche Bauelemente und Baugruppen, insbesondere eine Steuereinheit, sind in Fig. 2 nicht dargestellt. Ein Drehteller 12, auf welchem die Platte 7 in ihrer Arbeitsposition aufliegt, und eine Abtasteinrichtung 14 sind lediglich angedeutet.

In dem oberen Teil des Chassis 1 ist ein Spiegel 15 angeordnet, der einen aus der Reflexionslichtschranke 6 austretenden Lichtstrahl (16) bei Abwesenheit der Platte 7 in Richtung auf den Photoempfänger 12 richtet. Dabei kreuzt der Lichtstrahl 16 den Weg 17 der Platte 7 einmal hinter und einmal vor der Wälze 3.

Die Reflexionslichtschranken bestehen aus jeweils einer Leuchtdiode und einem Phototransistor. Zur Erzielung einer optischen Entkopplung ist die Leuchtdiode mit ihrer Austrittsfläche etwas vor bzw. oberhalb der Lichteintrittsfläche des Phototransistors angeordnet, wie es schematisch in Fig. 3 dargestellt ist. Die Phototransistoren sind mit Eingängen der Steuereinheit 21 verbunden, die im wesentlichen einen Mikrocomputer enthält.

Zur pulsierenden Stromversorgung der Leuchtdioden der Reflexionslichtschranken 6, 11 ist ein steuerbarer Schalter 22 vorgesehen, dessen Steuereingang mit einem Ausgang der Steuereinheit verbunden ist. Der pulsierende Betrieb der Reflexionslichtschranken 6, 11 kann beispielsweise derart erfolgen, daß die Pulsdauer bei einigen 100 µs liegt, während die Pulsfrequenz zwischen 20 Hz und 1000 Hz beträgt. Bei der Wahl der Pulsfrequenz ist die Einzug- und Ausschubgeschwindigkeit der Platte zu berücksichtigen. An die Steuereinheit 21 ist ferner ein Motor 23 zum Antrieb der Walze 3 angeschlossen. Einem weiteren Eingang der Steuereinheit 21 sind die Ausgangssignale des Lichtempfängers 12 zuführbar.

Beim manuellen Einschieben der Platte 7 wird zunächst der Lichtstrahl zum Lichtempfänger 12 unterbrochen. Dadurch wird der Antriebsmotor 23 der Walze 3 eingeschaltet und die Platte 7 eingezogen.

Ohne die zusätzliche Anordnung des Spiegels 15 und des Lichtempfängers 11 wird der Antriebsmotor erst eingeschaltet, wenn die Platte 7 in den Bereich des nicht reflektierten Lichtstrahls 16 gelangt. Die Reflexionslichtschranke 11 signalisiert, wenn die Platte 7 den Anschlag 8 erreicht. Dabei ist die Justierung der Reflexionslichtschranke 11 gegenüber dem Anschlag 8 nicht kritisch. Wird mit Hilfe der Reflexionslichtschranke 11 der Antrieb der Walze 3 in einem tolerierbaren Bereich vor dem Erreichen des Anschlags 8 abgeschaltet, so wird durch die Trägheit des Antriebs und der Walze 3 die Platte auf jeden Fall bis zum Anschlag 8 transportiert.

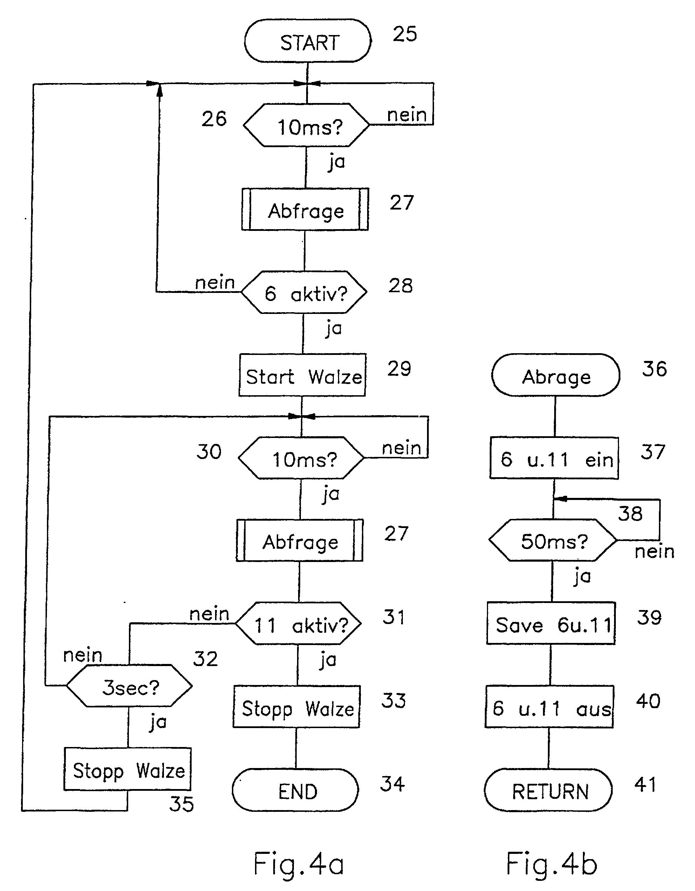

Fig. 4 zeigt ein Ablaufdiagramm für ein in der Steuereinheit 21 vorhandenes Programm zum Einzug der Platte ohne die Anwendung des Lichtempfängers 12. Dabei ist ein Hauptprogramm in Fig. 4a dargestellt, während sich Fig. 4b auf ein Unterprogramm zur Abfrage der Reflexionslichtschranken bezieht. Das Programm gemäß Fig. 4a wird bei 25 gestartet und durchläuft zunächst eine Verzögerungsschleife 26 für die Dauer von 10 ms. Danach wird bei 27 mit Hilfe des in Fig. 4b dargestellten Unterprogramms eine Abfrage der Reflexionslichtschranken durchgeführt. Bei 28 wird das Programm in Abhängigkeit davon verzweigt, ob die Reflexionslichtschranke 6 aktiv ist, d. h. ob reflektiertes Licht empfangen wird. Ist dieses nicht der Fall, werden die Programmteile 26, 27 und 28 solange wiederholt, bis eine Platte eingeführt ist und somit die Reflexionslichtschranke 6 aktiv wird. Dann wird bei 29 der Antrieb der Walze gestartet. Im Anschluß daran erfolgt bei 30 eine Verzögerung von 10 ms, worauf erneut das Unterprogramm 27 aufgerufen wird.

Bei 31 verzweigt sich das Programm in Abhängigkeit davon, ob die Reflexionslichtschranke 11 aktiv ist. Dieses ist nicht der Fall, wenn die Platte noch nicht die Reflexionslichtschranke 11 erreicht hat. Es wird dann bei 32 eine Verzweigung in Abhängigkeit von einer Verzögerungszeit von etwa 3 s vorgenommen. Ist die Verzögerungszeit noch nicht abgelaufen, werden die Programmteile 30, 27 und 31 solange wiederholt, bis die Reflexionslichtschranke 11 aktiv ist. Dann wird bei 33 der Antrieb der Walze abgeschaltet und das Programm bei 34 beendet.

Läuft jedoch die Verzögerungszeit bei 32 ab, ohne daß die Platte die Reflexionslichtschranke 11 erreicht hat, wird das Programm bei 35 mit dem Abschalten des Antriebs der Walze fortgesetzt. Danach geht das Programm in die von den Programmteilen 26, 27 und 28 gebildete Warteschleife. Das Abschalten des Antriebs der Walze nach der Verzögerungszeit erfolgt beispielsweise, wenn die Platte nach dem Einführen und Einschalten des Walzenantriebs festgehalten oder wieder herausgezogen wird.

Mit dem in Fig. 4b dargestellten Unterprogramm werden die Reflexionslichtschranken 6 und 11 abgefragt. Nach einem Start des Programms bei 36 werden bei 37 die Leuchtdioden der Reflexionslichtschranken eingeschaltet, worauf bei 38 eine Verzögerung von 50 µs erfolgt. Danach werden die Ausgangssignale der Empfänger der Reflexionslichtschranken bei 39 abgefragt und im Speicher abgelegt. Im Anschluß daran werden bei 40 die Leuchtdioden der Reflexionslichtschranken ausgeschaltet. Bei 41 wird das Unterprogramm zur Fortsetzung des Hauptprogramms verlassen.

## Patentansprüche

1. Gerät für ein plattenförmiges optisches Speichermedium (7), wobei das zugeführte Speichermedium (7) mindestens in einer Richtung senkrecht zu einer Drehachse bewegbar ist, um in eine Arbeitsposition im Wirkungsbereich einer optischen Abtasteinrichtung (14) zu gelangen, wobei mindestens eine Reflexionslichtschranke (6, 11) auf der gleichen Seite des Speichermediums (7) wie die Abtasteinrichtung (14) angeordnet ist, wobei die Reflexionslichtschranke (6, 11) die Ableitung eines Signals bewirkt, wenn das Speichermedium den Lichtstrahl der Reflexionslichtschranke (6, 11) in einer von der Arbeitsposition verschiedenen Zwischenposition kreuzt, wobei eine antreibbare Walze zur Bewegung des Speichermediums (7) senkrecht zur Drehachse vorgesehen ist, wobei ein Antrieb der Walze (3) mit Hilfe der Reflexionslichtschranke (6) einschaltbar ist, wobei die Reflexionslichtschranke (6) derart angeordnet ist, daß der Antrieb der Walze (3) bei einer Bewegung in umgekehrter Richtung zum Zwecke eines Ausschubs des Speichermediums (7) abgeschaltet wird, bevor die Walze (3) das Speichermedium (7) freigibt, **dadurch gekennzeichnet, daß** die Reflexionslichtschranke (6) zwischen der Walze (3) und der optischen Abtasteinrichtung (14) angeordnet ist.

2. Gerät nach Anspruch 1, **dadurch gekennzeichnet, daß** der Lichtstrahl den Weg (17) des Speichermediums (7) zu beiden Seiten der Walze (3) je einmal kreuzt.

3. Gerät nach Anspruch 1 oder 2, **dadurch gekennzeichnet, daß** in der Zwischenposition ein Randbereich des Speichermediums (7) im Bereich der Walze (3) liegt.

4. Gerät nach Anspruch 1, 2 oder 3, **dadurch gekennzeichnet, daß** sowohl für eine Zwischenposition, welche das optische Speichermedium (7) zunächst bei manueller Zuführung erreicht, als auch für eine Zwischenposition, in welcher sich das Speichermedium (7) der Drehachse befindet, je eine Reflexionslichtschranke (6, 11) vorgesehen ist.

5. Gerät nach einem der vorhergehenden Ansprüche, **dadurch gekennzeichnet, daß** bei der Reflexionslichtschranke (6, 11) eine Lichtaustrittsfläche vor oder oberhalb einer Lichteintrittsfläche angeordnet ist.

6. Gerät nach einem der vorhergehenden Ansprüche, **dadurch gekennzeichnet, daß** die Reflexionslichtschranke (6; 11) pulsierend betrieben wird.

7. Gerät nach einem der vorhergehenden Ansprüche, **dadurch gekennzeichnet, daß** die Reflexionslichtschranke (6; 11) auf einer die weiteren elektronischen Bauteile des Gerätes tragenden Leiterplatte (18) angeordnet ist.

8. Gerät nach einem der vorhergehenden Ansprüche, **dadurch gekennzeichnet, daß** eine Reflexionslichtschranke zum Erkennen der Größe des Speichermediums vorgesehen ist.

9. Gerät nach einem der vorhergehenden Ansprüche, **dadurch gekennzeichnet, daß** eine analoge Auswertung der Signale der Reflexionslichtschranke erfolgt.

## Claims

1. Apparatus for a disc-shaped optical storage medium (7), it being possible to move the fed storage medium. (7) at least in one direction perpendicular to an axis of rotation in order to reach a working position in the effective range of an optical scanning device (14), at least one reflection light barrier (6, 11) being arranged on the same side of the storage medium (7) as the scanning device (14), the reflection light barrier (6, 11) effecting the derivation of a signal when the storage medium passes the light beam of the reflection light barrier (6, 11) in an intermediate position different from the working position, a drivable drum for moving the storage medium (7) perpendicular to the axis of rotation being provided, it being possible to switch on a drive of the drum (3) with the aid of the reflection light barrier (6), and the reflection light barrier (6) being arranged in such a way that, upon a movement in the reverse direction, the drive of the drum (3) is switched off for the purpose of ejecting the storage medium (7) before the drum (3) releases the storage medium (7), **characterized in that** the reflection light barrier (6) is arranged between the drum (3) and the optical scanning device (14).

2. Apparatus according to Claim 1, **characterized in that** the light beam in each case crosses once the path (17) of the storage medium (7) on both sides of the drum (3).

3. Apparatus according to Claim 1 or 2, **characterized in that** in the intermediate position an edge region of the storage medium (7) is situated in the region of the drum (3).

4. Apparatus according to Claim 1, 2 or 3, **characterized in that** one reflection light barrier (6, 11) each is provided both for an intermediate position which the optical storage medium (7) firstly reaches in conjunction with a manual feed, and for an intermediate position in which the storage medium (7) [lacuna] of the axis of rotation is situated.

5. Apparatus according to one of the preceding claims, **characterized in that** a light exit surface is arranged in front of or above a light entry surface in the reflection light barrier (6, 11).

6. Apparatus according to one of the preceding claims, **characterized in that** the reflection light barrier (6, 11) is operated in a pulsed fashion.

7. Apparatus according to one of the preceding claims, **characterized in that** the reflection light barrier (6, 11) is arranged on a printed circuit board (18) carrying the further electronic components of the apparatus.

8. Apparatus according to one of the preceding claims, **characterized in that** a reflection light barrier is provided for detecting the size of the storage medium.

9. Apparatus according to one of the preceding claims, **characterized in that** the signals of the reflection light barrier are evaluated in analogue fashion.

## Revendications

1. Appareil pour un support de mémoire (7) optique en forme de disque, le support de mémoire (7) introduit étant mobile dans une direction perpendiculaire à un axe de rotation pour arriver dans une position de travail, dans la zone d'action d'une installation de détection optique (14), dans lequel
au moins une barrière lumineuse à réflexion (6, 11) est prévue du même côté du support de mémoire (7) que l'installation de détection (14),
la barrière lumineuse à réflexion (6, 11) fournit un signal lorsque le support de mémoire croise le faisceau lumineux de la barrière lumineuse à réflexion (6, 11) dans une position de travail différente de la position intermédiaire,
un cylindre entraîné pour déplacer le support de mémoire (7) est prévu perpendiculairement à l'axe de rotation, et l'entraînement du cylindre (7) est mis en marche à l'aide de la barrière lumineuse à réflexion (6),
la barrière lumineuse à réflexion (6) étant installée pour que l'entraînement du cylindre (3) soit coupé pour un déplacement en sens inverse servant à expulser le support de mémoire (7) avant que le cylindre (3) ne libère le support de mémoire (7),
**caractérisé en ce que**
la barrière lumineuse à réflexion (6) étant installée entre le cylindre (3) et l'installation de détection optique (14).

2. Appareil selon la revendication 1,
**caractérisé en ce que**
le faisceau lumineux croise le chemin (17) du support de mémoire (7) une fois des deux côtés du cylindre (3).

3. Appareil selon l'une quelconque des revendications 1 ou 2,
**caractérisé par**
une zone marginale du support de mémoire (7) qui se situe dans une position intermédiaire au niveau du cylindre (3).

4. Appareil selon l'une quelconque des revendications 1, 2, ou 3,
**caractérisé par**
une barrière lumineuse à réflexion (6, 11) respective à la fois pour une position intermédiaire dans laquelle arrive le support de mémoire optique (7) tout d'abord lors de l'introduction manuelle et aussi pour une position intermédiaire du support de mémoire (7) au niveau de l'axe de rotation.

5. Appareil selon l'une quelconque des revendications précédentes,
**caractérisé par**
une surface de sortie de lumière devant ou au-dessus d'une surface d'entrée de lumière pour la barrière lumineuse à réflexion (6, 11).

6. Appareil selon l'une quelconque des revendications précédentes,
**caractérisé en ce que**
la barrière lumineuse à réflexion (6, 11) a un fonctionnement impulsionnel.

7. Appareil selon l'une quelconque des revendications précédentes,
**caractérisé en ce que**
la barrière lumineuse à réflexion (6, 11) est prévue sur une plaque de circuit (18) portant les autres composants électroniques de l'appareil.

8. Appareil selon l'une quelconque des revendications précédentes,
**caractérisé par**
une barrière lumineuse à réflexion pour détecter la taille du support de mémoire.

9. Appareil selon l'une quelconque des revendications précédentes,
**caractérisé par**
une exploitation analogique des signaux fournis par la barrière lumineuse à réflexion.
